# EUROPÄISCHE PATENTSCHRIFT

(11) **EP 0 968 042 B1**
(45) Veröffentlichungstag und Bekanntmachung des Hinweises auf die Patenterteilung: **06.02.2002**
(21) Anmeldenummer: 98925397.6
(22) Anmeldetag: 16.03.1998
(51) Int. Cl.: B01D 46/24

(54) **FILTER FÜR EIN MIT STAUB BELADENES GAS**
FILTER FOR A DUST-LADEN GAS
FILTRE DESTINE A UN GAZ CHARGE DE POUSSIERE

(30) Priorität: 21.03.1997 DE 19711969
(43) Veröffentlichungstag der Anmeldung: 05.01.2000
(73) Patentinhaber: SIEMENS AKTIENGESELLSCHAFT, 80333 München (DE)
(72) Erfinder: STUHLMÜLLER, Franz, D-91056 Erlangen (DE)
(86) Internationale Anmeldenummer: DE9800777
(87) Internationale Veröffentlichungsnummer: WO9842428

(56) Entgegenhaltungen:
- EP-A- 0 459 163
- EP-A- 0 682 971
- DE-C- 4 229 723
- GB-A- 687 705

## Beschreibung

Die Erfindung bezieht sich auf einen Filter für ein mit Staub beladenes Gas. Sie betrifft weiter eine Filterkerze zur Verwendung in dem Filter.

In einer Verbrennungsanlage, insbesondere in einer Kohlevergasungsanlage einer Kraftwerksanlage, kann es abhängig vom verwendeten Brennstoff zur Erzeugung von mit Staub beladenem Gas oder Rauchgas kommen. Bei dem im Rauchgas mitgeführten Staub kann es sich beispielsweise um Kohlenstaub oder um eine andere aschereiche Substanz handeln. Bei einer mit einer Kohlevergasungsanlage versehenen Kraftwerksanlage wird das Gas nach seiner Verbrennung üblicherweise einer Gasturbine zugeführt, wo es sich arbeitsleistend entspannt. Vor seiner Zuführung zur Gasturbine ist das Gas dabei derart aufzubereiten, daß eine Beschädigung der Gasturbine sicher vermieden ist. Zum Schutz der Gasturbine ist im Rauchgaskanal einer derartigen Verbrennungsanlage daher üblicherweise ein Staubfilter vorgesehen, in dem eine Abscheidung des im Rauchgas geführten Staubs bewirkt wird.

Bei einem derartigen Filter für ein mit Staub beladenes Gas sind üblicherweise innerhalb eines Außengehäuses ein Rohgasraum und ein Reingasraum angeordnet. Beim Betrieb des Filters wird das mit Staub beladene Gas dem Rohgasraum zugeführt und gelangt von dort über eine Anzahl von Filterkerzen, an denen eine Staubabscheidung erfolgt, als gereinigtes Gas in den Reingasraum. Vom Reingasraum aus kann eine Abführung des gereinigten Gases erfolgen.

Die den Rohgasraum mit dem Reingasraum für die Durchströmung des Gases verbindenden Filterkerzen sind üblicherweise senkrecht angeordnet. Dabei kann eine hängende Anordnung vorgesehen sein, bei der die Filterkerzen in der Art von Bündeln oder Paketen an einer Tragekonstruktion aufgehängt sind. Alternativ kann auch eine stehende Anordnung vorgesehen sein, bei der die Filterkerzen in der Art von Bündeln oder Paketen auf einer gemeinsamen Trageplatte oder auf einem gemeinsamen Reingassammelrohr angeordnet sind. Aus der EP - 0 622 104 B1 ist eine Vorrichtung zum Filtern von staubbeladenen Gasen bekannt, bei der die Filterkerzen im wesentlichen senkrecht ausgerichtet und stehend auf einem Aufnahmeelement angeordnet sind.

Ein derartiger Filter ist üblicherweise hinsichtlich seiner Dimensionierung und hinsichtlich seiner Auslegung an die Verbrennungsanlage angepaßt. Beispielsweise ist ein in einer mit Kohlenstaub befeuerten Kraftwerksanlage vorgesehener Filter für die Durchströmung einer entsprechend großen Rauchgasmenge ausgelegt. Um dabei eine zuverlässige Staubabscheidung bei hoher Durchsatzrate zu gewährleisten, können mehr als 1.000 für die Durchströmung des Rauchgases parallel geschaltete Filterkerzen vorgesehen sein.

Bei der Verwendung einer derartigen Vielzahl von Filterkerzen ist der Zugang zu einer individuellen Filterkerze jedoch sehr erschwert. Eine Wartung oder ein Austausch einer Filterkerze, beispielsweise beim Ausfall der Filterkerze wegen Verstopfung oder Materialbruch, ist daher nur mit hohem Aufwand und unter Inkaufnahme einer langen Stillstandszeit der Verbrennungsanlage möglich.

Der Erfindung liegt daher die Aufgabe zugrunde, einen Filter für ein mit Staub beladenes Gas mit einer Anzahl von Filterkerzen, die einen Rohgasraum für die Durchströmung des Gases mit einem Reingasraum verbinden, anzugeben, bei dem eine Wartung oder ein Austausch einer individuellen Filterkerze mit besonders geringem Aufwand ermöglicht ist. Zudem soll eine zur Verwendung in einem derartigen Filter besonders geeignete Filterkerze angegeben werden.

Bezüglich des Filters wird diese Aufgabe erfindungsgemäß gelöst, indem eine zwischen dem Rohgasraum und dem Reingasraum angeordnete Trennwand in einem zur Aufnahme der Filterkerzen vorgesehenen Tragebereich als annähernd zylinderförmiger Tragmantel ausgebildet ist, wobei der Reingasraum in der Art eines den Rohgasraum umgebenden Ringraumes außerhalb des Tragebereichs der Trennwand angeordnet ist, und wobei ein Außengehäuse einen annähernd zylinderförmigen Gehäusebereich aufweist, dessen Hauptachse zu einer Hauptachse des Tragmantels kollinear ist, und der in Richtung seiner Hauptachse verschiebbar ist.

Die Erfindung geht dabei von der Überlegung aus, daß ein besonders geringer Aufwand bei der Wartung oder beim Austausch einer Filterkerze erreichbar ist, indem der Zugang zu jeder Filterkerze besonders einfach gehalten ist. Durch die Vermeidung einer Anordnung der Filterkerzen in der Art eines Bündels oder eines Pakets ist dabei jede Filterkerze zugänglich, ohne daß eine Demontage anderer Filterkerzen erforderlich wäre. Dazu ist die Trennwand im zur Aufnahme der Filterkerzen vorgesehenen Tragebereich derart ausgestaltet, daß jede Filterkerze gleichermaßen einfach zugänglich ist.

Der Filter ist besonders für eine stehende Bauweise geeignet, wobei die Hauptachse des Gehäusebereiches annähernd senkrecht angeordnet ist. Die Filterkerzen sind dabei vorzugsweise annähernd horizontal angeordnet.

Zur Vermeidung hoher lokaler Beanspruchung bei der Aufhängung ist der Filterkörper jeder Filterkerze vorzugsweise annähernd konisch ausgebildet. Dadurch ist ein besonders gleichmäßiges Strömungsprofil des die Filterkerze entlang einer durch die konische Ausbildung definierten Hauptachse durchströmenden Gases gewährleistet.

Für eine besonders zuverlässige Aufhängung der Filterkerzen ist vorzugsweise innerhalb des Rohgasraums eine zentrale Haltevorrichtung für die Filterkerzen vorgesehen. In weiter bevorzugter Ausgestaltung ist in einem Bodenbereich des Filters ein Staubaustragstrichter angeordnet.

Bezüglich der Filterkerze wird die genannte Aufgabe gelöst, indem für diese ein annähernd konisch ausgebildeter Filterkörper vorgesehen ist.

Ein derartiger Filterkörper ermöglicht auf besonders einfache Weise eine von einer bündelartigen Anordnung abweichende Montage, beispielsweise an einem geschlossenen Tragmantel oder in horizontaler Bauweise, ohne daß lokale Materialüberbeanspruchungen auftreten.

Die mit dem erfindungsgemäßen Filter erzielbaren Vorteile bestehen insbesondere darin, daß durch die Anordnung der Filterkerzen an dem annähernd zylinderförmigen Tragmantel jede individuelle Filterkerze gleichermaßen einfach zugänglich ist. Eine Wartung oder ein Austausch einer Filterkerze ist somit möglich, ohne daß eine Demontage einer anderen Filterkerze erforderlich wäre. Der Zeitaufwand bei Wartungsarbeiten an einem derartigen Filter und die Stillstandszeit der dem Filter vorgeschalteten Verbrennungs- oder Vergasungsanlage sind somit besonders gering. Die Zugänglichkeit der Filterkerzen ist dabei besonders vereinfacht, wenn der Gehäusebereich des Außengehäuses in der Art einer Haube in Hauptrichtung des Zylinders abnehmbar ist, wobei alle Filterkerzen gleichermaßen freigelegt werden.

Der Filter ist zudem aufgrund der Anordnung der Filterkerzen an dem annähernd zylinderförmigen Tragmantel hinsichtlich der Anzahl der Filterkerzen oder hinsichtlich seines Strömungsquerschnitts für das Gas besonders flexibel. Falls nämlich aus Auslegungsgründen eine erhöhte Anzahl von Filterkerzen oder ein erhöhter Strömungsquerschnitt erforderlich sein sollte, so kann der Tragmantel in Richtung seiner Hauptachse verlängert werden, ohne daß eine Veränderung sonstiger Auslegungsparameter, wie beispielsweise seines Außendurchmessers oder der Wandstärke des Außengehäuses, erforderlich wäre.

Ein Ausführungsbeispiel der Erfindung wird anhand einer Zeichnung näher erläutert. Darin zeigen:
- Figur 1:: im Längsschnitt einen Filter für ein mit Staub beladenes Gas, und
- Figur 2:: den Filter gemäß Figur 1 im Querschnitt.

Gleiche Teile sind in beiden Figuren mit denselben Bezugszeichen versehen.

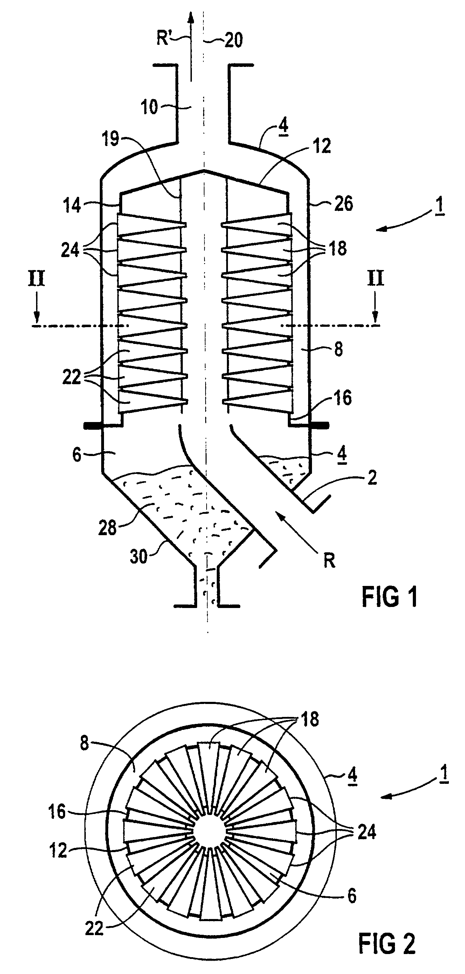

Der Filter 1 gemäß den Figuren 1, 2 ist für die Abscheidung von Staub aus dem Rauchgas einer nicht näher dargestellten druckwirbelschichtgefeuerten Verbrennungsanlage oder Kohlevergasungsanlage vorgesehen. Dazu ist der Filter 1 in den Zuführungskanal einer Gasturbine einer fossil befeuerten Kraftwerksanlage geschaltet.

Über einen Zuführungsstutzen 2 ist dem Filter 1 mit Staub beladenes Rauchgas oder Rohgas R zuführbar. Der Zuführungsstutzen 2 ist durch ein Außengehäuse 4 des Filters 1 geführt und mündet in einen innerhalb des Außengehäuses 4 vorgesehenen Rohgasraum 6. Zusätzlich zum Rohgasraum 6 ist innerhalb des Außengehäuses 4 ein Reingasraum 8 vorgesehen. Aus dem Reingasraum 8 ist Reingas R' über einen Reingasaustritt 10 abführbar.

Der Rohgasraum 6 ist mittels einer Trennwand 12 von dem Reingasraum 8 abgetrennt. In einem Tragebereich 14 ist die Trennwand 12 als zylinderförmiger Tragmantel 16 ausgebildet, an dem eine Anzahl von Filterkerzen 18 aufgehängt sind. Der Rohgasraum 6 ist dabei im Innenbereich des Tragmantels 16 vorgesehen, wohingegen der Reingasraum 8 in der Art eines den Rohgasraum 6 umgebenden Ringraumes außerhalb des Tragebereichs 14 der Trennwand 12 angeordnet ist. Innerhalb des Rohgasraums 6 ist eine zentrale Haltevorrichtung 19 für die Filterkerzen 18 vorgesehen. Die Haltevorrichtung 19 kann dabei beispielsweise als hohles Halterohr ausgeführt sein, das mit einer Anzahl von Öffnungen an seiner Außenseite versehen ist. Die Öffnungen ermöglichen dabei eine besonders günstige Zuleitung des Rohgases R zu den Filterkerzen 18. Die Hauptachse 20 des zylinderförmigen Tragmantels 16 ist in annähernd senkrechter Richtung angeordnet, wobei die Filterkerzen 18 in annähernd horizontaler Richtung positioniert sind.

Jede Filterkerze 18 weist einen konisch geformten Filterkörper 22 auf, der in den Rohgasraum 6 hineinragt. Der Filterkörper 22 weist dabei eine poröse Wandung auf und kann beispielsweise aus einem keramischen Werkstoff gefertigt sein. Alternativ kann auch ein Metall oder eine Metallverbindung als Werkstoff für den Filterkörper 22 vorgesehen sein. Ein Hohlraum innerhalb der porösen Wandung jedes Filterkörpers 22 steht über eine Austrittsöffnung 24 der jeweiligen Filterkerze 18 mit dem Reingasraum 8 in Verbindung. Somit ist der Reingasraum 8 mit dem Rohgasraum 6 für die Durchströmung eines Gases verbunden, wobei im Rohgas R mitgeführte Staubpartikel an der porösen Wandung des Filterkörpers 22 einer Filterkerze 18 abgeschieden werden.

Das Außengehäuse 4 des Filters 1 weist einen zylinderförmig ausgebildeten Gehäusebereich 26 auf, wobei die Hauptachse des Gehäusebereiches 26 mit der Hauptachse 20 des Tragmantels 16 übereinstimmt. Die Hauptachse des Gehäusebereiches 26 des Außengehäuses 4 ist somit zur Hauptachse 20 des Tragmantels 16 kollinear. Der Gehäusebereich 26 des Außengehäuses 4 ist in Richtung der Hauptachse 20 verschiebbar. In einem Bodenbereich 28 des Außengehäuses 4 ist ein Staubaustragstrichter 30 zur Abführung von an den Filterkerzen 18 abgeschiedenem Staub angeordnet.

Durch die Anordnung der Filterkerzen 18 an dem annähernd zylinderförmigen Tragmantel 16 ist bei entferntem Gehäusebereich 26 jede individuelle Filterkerze 18 gleichermaßen einfach zugänglich. Die Zugänglichkeit der Filterkerzen 18 ist dabei besonders dadurch vereinfacht, daß der Gehäusebereich 26 des Außengehäuses 4 in der Art einer Haube abnehmbar ist, wobei alle Filterkerzen 18 gleichermaßen freigelegt werden. Eine Wartung oder ein Austausch einer Filterkerze 18 ist somit möglich, ohne daß eine Demontage einer anderen Filterkerze 18 erforderlich wäre. Der Zeitaufwand bei Wartungsarbeiten an dem Filter 1 und die Stillstandszeit der den Filter 1 aufweisenden Kraftwerksanlage sind somit besonders gering.

Der Filter 1 ist zudem aufgrund der Anordnung der Filterkerzen 18 an dem annähernd zylinderförmigen Tragmantel 16 hinsichtlich der Anzahl der Filterkerzen 18 oder hinsichtlich seines Strömungsquerschnitts für das Gas besonders flexibel. Falls nämlich aus Auslegungsgründen eine erhöhte Anzahl von Filterkerzen 18 oder ein erhöhter Strömungsquerschnitt erforderlich sein sollte, so kann der Tragmantel 16 in Richtung seiner Hauptachse 20 verlängert werden, ohne daß eine Veränderung sonstiger Auslegungsparameter, wie beispielsweise seines Außendurchmessers oder der Wandstärke des Außengehäuses 4, erforderlich wäre.

## Patentansprüche

1. Filter (1) für ein mit Staub beladenes Gas mit einer Anzahl von Filterkerzen (18), die einen Rohgasraum (6) für die Durchströmung des Gases mit einem Reingasraum (8) verbinden, wobei eine zwischen dem Rohgasraum (6) und dem Reingasraum (8) angeordnete Trennwand (12) in einem zur Aufnahme der Filterkerzen (18) vorgesehenen Tragebereich (14) als annähernd zylinderförmiger Tragmantel (16) ausgebildet ist, wobei der Reingasraum (8) in der Art eines Ringraumes außerhalb des Tragebereichs (14) der Trennwand (12) angeordnet ist, und mit einem Außengehäuse,das (4) einen annähernd zylinderförmigen Gehäusebereich (26) aufweist, wobei eine Hauptachse des Gehäusebereichs (26) zu einer Hauptachse (20) des Tragmantels (16) kollinear ist, und wobei der Gehäusebereich (26) in Richtung seiner Hauptachse verschiebbar ist.

2. Filter (1) nach Anspruch 1, bei dem die Hauptachse des Gehäusebereiches (26) annähernd senkrecht angeordnet ist.

3. Filter (1) nach Anspruch 1 oder 2, bei dem die Filterkerzen (18) annähernd horizontal angeordnet sind.

4. Filter (1) nach einem der Ansprüche 1 bis 3, wobei jede Filterkerze (18) einen annähernd konisch ausgebildeten Filterkörper (22) aufweist.

5. Filter (1) nach einem der Ansprüche 1 bis 4, bei dem innerhalb des Rohgasraums (6) eine zentrale Haltevorrichtung (19) für die Filterkerzen (18) vorgesehen ist.

6. Filter (1) nach einem der Ansprüche 1 bis 5, bei dem in einem Bodenbereich (28) ein Staubaustragstrichter (30) angeordnet ist.

## Claims

1. Filter (1) for a dust-laden gas having a number of filter candles (18) which connect a crude-gas chamber (6) for the through-flow of the gas with a pure-gas chamber (8), wherein a partition wall (12) that is arranged between the crude-gas chamber (6) and the pure-gas chamber (8) is formed as a substantially cylindrical supporting casing (16) in a supporting region (14) that is provided to accommodate the filter candles (18), wherein the pure-gas chamber (8) is arranged in the manner of an annulus outside the supporting region (14) of the partition wall (12), and having an outer housing (4) which has a substantially cylindrical housing region (26), wherein a main axis of the housing region (26) is collinear with respect to a main axis .(20) of the supporting casing (16), and wherein the housing region (26) can be displaced in the direction of its main axis.

2. Filter (1) according to claim 1, wherein the main axis of the housing region (26) is arranged so as to be substantially vertical.

3. Filter (1) according to claim 1 or 2, wherein the filter candles (18) are arranged so as to be substantially horizontal.

4. Filter (1) according to one of claims 1 to 3, wherein each filter candle (18) has a substantially conically formed filter body (22).

5. Filter (1) according to one of claims 1 to 4, wherein a central holding arrangement (19) for the filter candles (18) is provided inside the crude-gas chamber (6).

6. Filter (1) according to one of claims 1 to 5, wherein a dust-discharge funnel (30) is arranged in a base region (28).

## Revendications

1. Filtre (1) destiné à un gaz chargé de poussières et comprenant un certain nombre de bougies (18) de filtre qui mettent une chambre (6) destinée au gaz brut en communication pour le passage du gaz avec une chambre (8) pour le gaz épuré, une cloison (12) interposée entre la chambre (6) pour le gaz brut et la chambre (8) pour le gaz épuré étant constituée, dans une partie (14) de support prévue pour la réception des bougies (18) de filtre, en chemise (18) support à peu près de forme cylindrique, la chambre (8) pour le gaz épuré étant disposée à la manière d'une chambre annulaire à l'extérieur de la partie (14) de support de la cloison (12) et ayant une enveloppe extérieure qui (4) a une partie (26) d'enveloppe à peu près de forme cylindrique, un axe principal de la partie (26) d'enveloppe étant colinéaire à un axe (20) principal de la chemise (16) support et la partie (26) d'enveloppe pouvant coulisser dans la direction de son axe principal.

2. Filtre (1) suivant la revendication 1, dans lequel l'axe principal de la partie (26) d'enveloppe est à peu près vertical.

3. Filtre (1) suivant la revendication 1 ou 2, dans lequel les bougies (18) de filtre sont disposées à peu près horizontalement.

4. Filtre (1) suivant l'une des revendications 1 à 3, dans lequel chaque bougie (18) de filtre a un corps (22) de filtre de forme à peu près conique.

5. Filtre (1) suivant l'une des revendications 1 à 4, dans lequel il est prévu à l'intérieur de la chambre (6) pour le gaz brut un dispositif (19) central de maintien des bougies (18) de filtre.

6. Filtre (1) suivant l'une des revendications 1 à 5, dans lequel il est monté une trémie (30) de déchargement de poussières dans la partie (28) du fond.
